# EUROPÄISCHE PATENTANMELDUNG

(11) **EP 4 269 164 A1**
(43) Veröffentlichungstag der Anmeldung: **01.11.2023**
(21) Anmeldenummer: 23156463.4
(22) Anmeldetag: 14.02.2023
(51) Int. Cl.: B60L 53/16, H01R 13/52

(54) **BAUGRUPPE FÜR EINE LADESTECKER-KOPPLUNGSEINRICHTUNG**

(30) Priorität: 27.04.2022 DE 102022110146
(71) Anmelder: HUF Hülsbeck & Fürst GmbH & Co. KG, 42551 Velbert (DE)
(72) Erfinder: SCHÜTZ, Heiko, 42549 Velbert (DE); KOCH, Andreas, 42579 Heiligenhaus (DE)
(74) Vertreter: Zenz Patentanwälte Partnerschaft mbB

(57) **Zusammenfassung**

Eine Baugruppe für eine Ladestecker-Kopplungseinrichtung an einem Kraftfahrzeug mit einem Trägerrahmen (8) zur Befestigung an der Innenseite eines Karosseriebauteils (1), in dem eine Öffnung zur Aufnahme einer Ladestecker-Kupplung (5) gebildet ist. Ein Aktuator (4) ist mit dem Trägerrahmen (8) gekoppelt und eine gegen den Trägerrahmen (8) schwenkbare Abdeckung (3) ist über einen Schwenkarm (4a) mit dem Aktuator (4) gekoppelt, um die Abdeckung (3) zwischen einer Schließstellung, und einer Freigabestellung zu schwenken. An dem Trägerrahmen (8) ist eine Dichtung (9) aus einem elastischen Material angeordnet und an der Abdeckung (3) befindet sich ein Betätigungselement (3b; 10), welches an der dem Trägerrahmen (8) zugewandten Innenseite der Abdeckung (3) hervorsteht. Das Betätigungselement (3b; 10) ist in seiner Erstreckung von der Abdeckung (3) in Richtung des Trägerrahmens (8) längenverstellbar und in seiner Lage derart an der Abdeckung (3) platziert, dass es in der Schließstellung in die vom Trägerrahmen (8) umfasste Öffnung eintaucht.

## Beschreibung

Die Erfindung betrifft eine Baugruppe für eine Ladestecker-Kopplungseinrichtung zur Anbringung an einem Kraftfahrzeug.

Insbesondere betrifft die Erfindung eine Baugruppe mit einem Trägerrahmen, der zur Befestigung an der Innenseite eines Karosseriebauteiles von einem Kraftfahrzeug vorgesehen ist. In dem Trägerrahmen ist eine Öffnung zur Aufnahme eine Ladestecker-Kupplung ausgebildet. Weiterhin weist die Baugruppe einen Aktuator auf, der mit dem Trägerrahmen gekoppelt ist sowie eine gegen den Trägerrahmen schwenkbare Abdeckung, welche in Betrieb und nach Montage eine aufgenommene Ladestecker-Kupplung abdecken oder freigeben kann. Dazu weist die Baugruppe einen mit der Abdeckung verbundenen Schwenkarm auf, welcher seinerseits mit dem Aktuator gekoppelt ist und die Abdeckung unter Antrieb des Aktuators gegenüber dem Trägerrahmen zwischen einer Schließstellung, in welcher die Abdeckung am Trägerrahmen anliegt und einer Freigabestellung, in welcher die Abdeckung gegenüber dem Trägerrahmen ausgeschwenkt ist, verschwenkt. An dem Trägerrahmen ist eine Dichtung aus einem elastischen Material angeordnet, wobei diese Dichtung so ausgebildet ist, dass sie dichtend an dem Trägerrahmen einerseits und der Abdeckung andererseits anliegt, sofern sich die Abdeckung in der Schließstellung befindet.

Baugruppen der genannten Art werden im Stand der Technik verwendet, um bedarfsweise zugängliche und leicht bedienbare Ladeschnittstellen zum Aufladen von elektrisch betriebenen Kraftfahrzeugen zur Verfügung zu stellen. Solche Baugruppen werden ohne eine konkrete Ladestecker-Kupplung an Fahrzeughersteller zur Verfügung gestellt, um verschiedene Ladestecker-Kupplungen, je nach Anforderungen des Zielmarktes oder sonstigen technischen Anforderungen, in die Baugruppe aufnehmen zu können.

Bei Montage am Fahrzeug kommen also neben der Baugruppe selbst auch noch wenigstens die Ladestecker-Kupplung selbst sowie Karosseriebauteile in Verbindung, die nach Fixierung die vollständige, bedienbare Schnittstelle bilden, auf die ein Benutzer zum Laden des Fahrzeuges zugreift.

Die schwenkbare Abdeckung schützt und überdeckt im Falle des Nichtzugriffes (z.B. im Fahrbetrieb) die unterliegend montierte Ladestecker-Kupplung. Wenn ein Benutzer den Ladevorgang einleiten will, muss er zunächst die Abdeckung von der Ladestecker-Kupplung wegschwenken bzw. wegschwenken lassen. Dazu ist es vorgesehen, dass ein Benutzer durch ein kurzes Eindrücken der Abdeckung einen Tastschalter betätigt, welcher unterhalb der Abdeckung an der Ladestecker-Kupplung angeordnet ist. Sobald dies geschieht, wird das Zugriffsrecht des Benutzers durch ein schlüsselloses Zugangssystem geprüft und bei erfolgreicher Prüfung wird über den Aktuator der Schwenkarm mitsamt der Abdeckung ausgeschwenkt, so dass der Zugriff auf die Ladestecker-Kupplung freigegeben ist.

Bei solchen Aufbauten stellt sich das Problem, dass die Fertigungstoleranzen und auch Montagetoleranzen von den vorstehend genannten mechanischen Komponenten, also der Baugruppe für die Ladestecker-Kopplungseinrichtung, der Karosserie und daran befindlichen Befestigungspunkten und auch der Ladestecker-Kupplung zusammenkommen. Dennoch soll durch ein Eindrücken der Abdeckung jederzeit gewährleistet sein, dass einerseits eine sichere Betätigung erfolgt und andererseits der auf die unterliegenden Tastschalter der Ladestecker-Kupplung einwirkende Kraft nicht zerstörerisch ist.

Aufgabe der Erfindung ist es, eine verbesserte Baugruppe zum zur verlässlichen und dauerhaften Betätigung zur Verfügung zu stellen.

Diese Aufgabe wird gelöst durch eine Baugruppe mit den Merkmalen des Patentanspruches 1.

Gemäß der Erfindung ist an der Abdeckung ein Betätigungselement angeordnet, wobei das Betätigungselement von der Innenseite der Abdeckung hervorsteht, welche dem Trägerrahmen zugewandt ist. Das Betätigungselement ist in seiner Erstreckung von der Abdeckung in Richtung des Trägerrahmens längenverstellbar ausgebildet und in seiner Lage außerdem so an der Abdeckung platziert, dass es in der Schließstellung in die vom Trägerrahmen umfasste Öffnung eintaucht.

Wie vorstehend erläutert, wird bei der Montage eine Ladestecker-Kupplung in der Öffnung des Trägerrahmens platziert, so dass diese mit ihren Ladekontakten unterhalb der Abdeckung liegt. Die Ladestecker-Kupplungen weisen einen Tastschalter auf, auf den bei leichtem Eindrücken der Abdeckung eingewirkt wird, um dann eine Öffnung der Abdeckung zu veranlassen. Das erfindungsgemäß Betätigungselement ist derart längenverstellbar, dass es Lageabweichungen und Abstandsabweichungen zwischen der Abdeckung einerseits und der unterliegenden Ladestecker-Kupplung andererseits kompensiert. Während der Montage wird die Länge des Betätigungselementes angepasst, um den Toleranzen des konkreten Falls Rechnung zu tragen und für eine jederzeit sichere Betätigung des unterliegenden Tastschalters bei begrenzter Eindrucktiefe zu sorgen. Nach dieser einmaligen Justage wird die Länge des Betätigungselementes dauerhaft festgelegt, das Betätigungselement also gegen Längenverstellung gesichert.

Die Längenverstellung kann vorgenommen werden, sobald sämtliche Komponenten am Fahrzeug montiert sind, so dass dann die Toleranzen und Abstände feststehen. Die Abstände werden sich im Betrieb nicht mehr ändern und das Betätigungselement kann in seiner Länge angepasst werden, um die gewünschte Betätigung sicherzustellen.

In einer bevorzugten Ausgestaltung der Erfindung ist das Betätigungselement zur Längenverstellung mit einer Schraube und zugeordnetem Gewinde ausgebildet. In dieser besonders einfachen Gestaltung kann die Schraube, z. B. in Gestalt einer Madenschraube, zur Justage der Länge des Betätigungselementes eingedreht oder ausgedreht werden und anschließend, nach erfolgter Justage, fixiert werden. Zur Fixierung kommen beispielsweise Methoden der Anbringung einer Kontermutter oder die Fixierung mit einem Klebstoffpunkt in Frage.

In einer anderen bevorzugten Ausführungsform weist das Betätigungselement eine Gewindehülse auf, sowie ein auf oder in der Gewindehülse schraubbaren Stelleinsatz, so dass durch Verdrehen/Schrauben des Stelleinsatzes gegenüber der Gewindehülse eine Längenverstellung des Betätigungselementes erfolgt. In einem solchen Ausführungsbeispiel können die verstellbaren Elemente, also Gewindehülse einerseits und schraubbarer Stelleinsatz andererseits aus einem Kunststoffmaterial gefertigt sein und insbesondere auch so ausgebildet sein, dass sie werkzeugfrei und händisch verstellbar sind. Aus einer Vormontagestellung, in welchem der Stelleinsatz teilweise in die Gewindehülse eingedreht ist und welcher auf eine Minimallänge eingestellt wird, kann eine finale Justage nach Montage besonders schnell erfolgen.

In der genannten Ausführungsform ist es besonders vorteilhaft, wenn der Stelleinsatz radiale Rastmittel aufweist, welche in korrespondierende Haltemittel an der Abdeckung eingreifen, um den Stelleinsatz nach erfolgter Längeneinstellung in seiner Stelllage gegen Drehung zu verrasten.

Damit gewährleistet ist, dass sich die Längenverstellung im späteren Betrieb nicht wieder verändert, sorgen die radialen Rastmittel dafür, dass eine Änderung der Drehlage nur durch gezielt einsetzende Stellkräfte, nicht jedoch durch Vibrationen oder Fliehkräfte möglich ist. Die Rastmittel können insbesondere zueinander korrespondierende und im Material des Stelleinsatzes ausgebildete Vorsprünge oder Rastnasen sein, welche an korrespondierenden Rastmitteln an der Baugruppe während der Montage und Längeneinstellung abgleiten. Wird die Kraft der Einstellung aufgehoben, greifen die Rastmittel ineinander und sichern den Stelleinsatz gegen Drehung.

In einer alternativen Ausführungsform der Erfindung ist das Betätigungselement mit einer Schubhülse und einem in die Schubhülse eingesteckten Schubeinsatz ausgebildet. Durch Verschieben des Schubeinsatzes in der Schubhülse wird die Längenverstellung vorgenommen.

Gegenüber der Einstellung durch Verdrehen eines Mittels weist eine Schubhülse eine besonders rasche Einstellungsmöglichkeit auf. Außerdem kann die Anpresskraft unmittelbar an dem Schubeinsatz abgenommen werden, im Gegensatz zu einer Gewindeverbindung. Die Kraft, mit der also der Schubeinsatz auf einen unterliegenden Tastschalter einwirkt, kann gemessen werden und der Schubeinsatz kann, je nach gewünschter Kraft, eingestellt werden. Die Fixierung des Schubeinsatzes kann wiederum durch ein Klebepunkt oder geeignete Haltemittel erfolgen.

In einer Weiterbildung dieser Ausführungsform ist es vorgesehen, dass die Baugruppe an der Schubhülse und/oder dem Schubeinsatz Sicherungsmittel aufweist, um die Schubhülse und den Schubeinsatz zueinander gegen Längenverstellung zu arretieren.

Insbesondere kann vorgesehen sein, dass eine seitliche Kerbung des Schubeinsatzes vorgesehen ist, zu welchem eingreifende Federelemente zur Justage auseinandergestellt werden, so dass der Schubeinsatz frei in seiner Länge eingestellt werden kann. Nach Längenjustage werden die Federn freigegeben, so dass sie in die Kerbungen oder Profilierungen des Schubeinsatzes eingreifen und diesen gegen eine Längenverstellung sichern. Entsprechendes kann auch durch eine Federspange erreicht werden, die durch Öffnungen oder Nuten der Schubhülse geschoben wird und den Schubeinsatz nach Justage gegen die Schubhülse verklemmt.

In einer weiteren Ausführungsform weisen die Sicherungsmittel einen Stift oder Dorn auf, welcher durch die Schubhülse und den Schubeinsatz gesteckt oder getrieben wird. Eine derartige Fixierung ist regelmäßig besonders haltbar und auch endgültig. Durch ein geeignetes, abgestimmtes Werkzeug kann ein Dorn durch das Kunststoffmaterial der Schubhülse und des Schubeinsatzes getrieben werden und fixiert diese mechanisch stabil zueinander.

Gemäß einem Verfahren zum Einbau einer Baugruppe gemäß der Erfindung sind entsprechend folgende Schritte vorgesehen. Zunächst wird der Trägerrahmen an der Innenseite eines Karosserieteils an einem Kraftfahrzeug festgelegt, also befestigt, wobei der Trägerrahmen eine Öffnung in dem Karosserieteil umgreift, in welchem der Zugriff eines Benutzers auf eine Ladestecker-Kupplung vorgesehen ist. Anschließend wird eine ausgewählte Ladestecker-Kupplung an dem Trägerrahmen und/oder an dem Karosserieteil derart befestigt, dass die Ladestecker-Kupplung mit ihrem Kupplungsabschnitt, also den elektrischen Kontakten, im freien Bereich der Öffnung in dem Karosserieteil angeordnet wird. Dabei wird auch ein in der Ladestecker-Kupplung ausgebildeter Tastschalter in der Öffnung platziert. Dies ist der Tastschalter, der eine Öffnung der Abdeckung initiiert, sobald er betätigt wird. Sind diese Komponenten montiert, dann sind die Lagen der Komponenten zueinander festgelegt. Hiernach wird die Abdeckung in die Schließstellung geschwenkt und anschließend wird die Abdeckung in Richtung der abgedeckten Ladestecker-Kupplung unter Kompression einer zwischenliegenden Dichtung eingedrückt. Dies ist der Vorgang, den auch ein Benutzer später zum Auslösen des Ausschwenkens der Abdeckung für einen Zugriff der unterliegenden Ladestecker-Kupplung durchführen wird. Zur Justage wird dieses Eindrücken jedoch so weit durchgeführt und die Dichtung wird derart komprimiert, dass die Abdeckung zur Anlage an einem Anschlag des Trägerrahmens oder auch der Karosserie gelangt. Dies ist die maximale Eindrucktiefe, die unter Überwindung der elastischen Gegenkraft der zwischenliegenden Dichtung im Benutzungsfall zu erwarten ist. In dieser Stellung wird das Betätigungselement an der Abdeckung so in seiner Länge verstellt, dass der Tastschalter betätigt wird. Dabei kann gegebenenfalls die auf dem Tastschalter wirkende Kraft gemessen werden, regelmäßig reicht es jedoch aus, das Auslösen des Tastschalters zu überwachen.

Wird anschließend die Abdeckung wieder freigegeben, ist sichergestellt, dass eine Zerstörung des Tastschalters durch kräftige Betätigung der Abdeckung im späteren Benutzungsfall ausgeschlossen ist. In einer Weiterbildung des Verfahrens wird nach dem Freigeben der Abdeckung (wodurch dass diese durch die Dichtung zwischen Abdeckung und Trägerrahmen wieder in ihre Schließstellung zurückgestellt wird) die Längenverstellung des Betätigungselementes um einen vorgegebenen Wert verändert. Insbesondere kann die Länge um einen vorgegebenen Wert zusätzlich vergrößert werden, um eine sichere Betätigung auch bei geringeren Eindrucktiefen sicherzustellen. Diese Längenverstellung um einen vorgegebenen Wert ist auf dem erlaubten Schalthub des Tastschalters abzustimmen während in dem ursprünglichen Verfahren eine Betätigung bei minimalem Hub eingestellt wurde, kann nun also die Längenverstellung so angepasst werden, dass eine Auslösung auch bei einer leichten Betätigung der Abdeckung erfolgen kann. Dazu kann die Längenverstellung des Betätigungselementes die bereits vorstehend erwähnten Rastungen aufweisen, so dass beispielsweise eine Längenvergrößerung durch Verstellung um eine vorgegebene Anzahl von Raststellungen möglich ist.

In einer bevorzugten Ausgestaltung des Verfahrens wird anschließend eine Fixierung des Betätigungselementes gegenüber der Längenverstellung vorgenommen. Diese Fixierung kann durch Kleben, verrasten, schweißen, quetschen, klammern, nieten oder beliebige andere Weise vorgenommen werden.

Die Erfindung wird nun anhand der beiliegenden Zeichnung näher erläutert.
Figur 1a zeigt eine teildurchsichtige Darstellung einer montierten Baugruppe gemäß einem Ausführungsbeispiel der Erfindung mit weiteren Komponenten;
Figur 1b zeigt die Ansicht aus Figur 1a mit entfernter Abdeckblende;
Figur 1c zeigt die Komponenten aus den Figuren 1a und 1b in einer Ansicht von der Innenseite;
die Figuren 3a, 2b und 2c zeigen in schematischer Weise einen Justage-Ablauf des Betätigungselements einer erfindungsgemäßen Baugruppe bei ersten Fertigungstoleranzen;

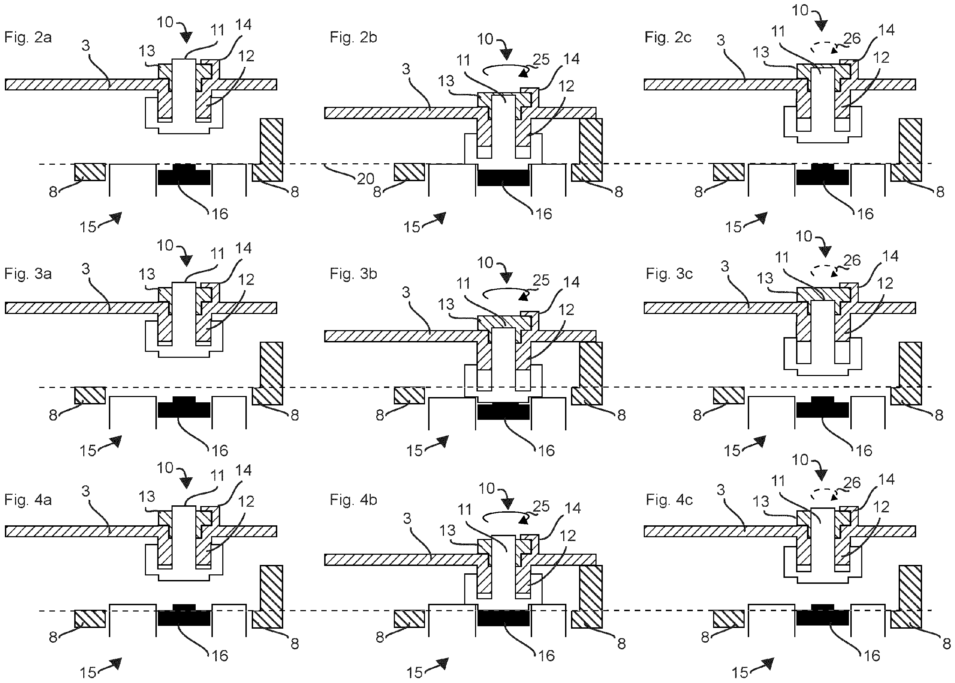

die Figuren 3a, 3b und 3c zeigen schematisch einen Justage-Ablauf des Betätigungselements einer erfindungsgemäßen Baugruppe bei bei zweiten Fertigungstoleranzen;
die Figuren 4a, 4b und 4c zeigen in schematischer Weise einen Justage-Ablauf des Betätigungselements einer erfindungsgemäßen Baugruppe bei dritten Fertigungstoleranzen.

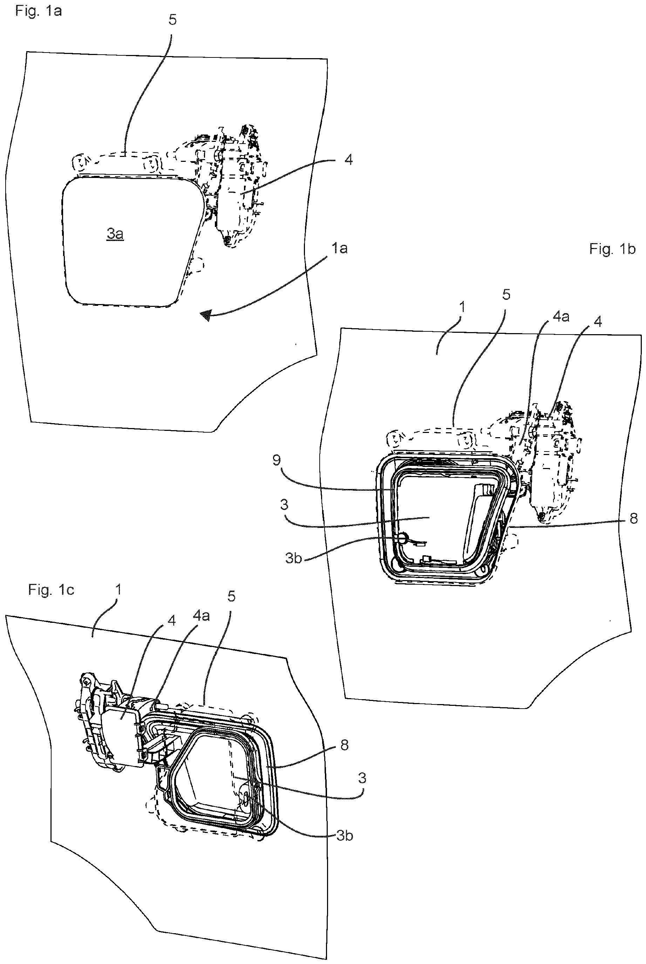

Figur 1a zeigt ein Karosserieblech 1, in dem ein Ausschnitt 1a gebildet ist. Der Ausschnitt wird durch eine Blende 3a, welche auf einer Abdeckung 3 fixiert ist, abgedeckt. In gebrochenen Linien sind Komponenten dargestellt, die hinter dem Karosserieblech 1 liegen. Ein Aktuator 4 ist ein Bestandteil der Baugruppe, welcher die hinter der Blende 3a liegende Abdeckung 3 mitsamt der Blende 3a ausschwenken kann. Die Ladestecker-Kupplung 5 ist auf der Innenseite des Karosserieblechens 1 montiert, so dass die daran befindlichen Ladekontakte durch den Ausschnitt 1a zugänglich sind, wenn die Abdeckung 3 mit der Blende 3a ausgeschwenkt wurde.

Figur 1b zeigt die Ansicht aus Figur 1a, wobei jedoch die Blende 3a entfernt wurde, so dass die unterliegende Abdeckung 3 sichtbar ist. An der Abdeckung 3 ist ein Betätigungselement 3b in Gestalt eines Stellmittels angeordnet. Die genaue Funktion wird in den nachfolgenden Zeichnungen näher erläutert. Das Betätigungselement 3b liegt in der hier dargestellten Stellung über einem darunter angeordneten Tastschalter, welcher zu der Ladestecker-Kupplung 5 gehört. Drückt ein Bediener auf die Abdeckung 3, genauer auf die mit der Abdeckung 3 verbundene Blende 3a, so wirkt das Betätigungselement 3b auf den unterliegenden Tastschalter der Ladestecker-Kupplung 5 ein, was einen Öffnungsvorgang der Abdeckung initiiert. Wird dieser Öffnungsvorgang erfolgreich durchgeführt, bewirkt der Aktuator 4 ein Ausschwenken der Abdeckung 3 mitsamt der Blende 3a und gibt die unterliegende Ladestecker-Kupplung 5 mit ihren Ladekontakten frei.

Figur 1c zeigt die Lage der Komponenten zueinander von der Innenseite, wobei die Ladestecker-Kupplung 5 weiterhin in gebrochenen Linien dargestellt ist, da sie nicht zur Baugruppe für eine Ladestecker-Kopplungseinrichtung gehört. Sichtbar in dieser Darstellung ist jedoch die Erstreckung des Betätigungselements 3b, welches längenverstellbar ist.

Die Figuren 1a, 1b und 1c zeigen die bei der Montage miteinander zu koppelnden Bestandteile der schließlich gebildeten Ladeschnittstelle. Sowohl bei der Fertigung als auch bei Montage können aufgrund von Toleranzen Abweichungen entstehen, welche im fertig montierten System den Abstand von der Abdeckung (einschließlich ihrer Blende 3a) zu der unterliegenden Ladestecker-Kupplung 5 beeinflussen. Das Betätigungselement 3b, welches mit einer einstellbaren Länge ausgebildet ist, kann dies Toleranzen ausgleichen, um die Betätigung eines Schalters in der Ladestecker-Kupplung 5 jederzeit sicherzustellen.

Die Figuren 2a, 2b und 2c zeigen schematisch die Einstellung eines Betätigungselementes 10 gemäß einer ersten Ausführungsform der Erfindung. Die Abdeckung 3 trägt das Betätigungselement 10. Das Betätigungselement weist einen Stempel 11 auf, der in einer Hülse 12 geführt ist. Die Hülse 12 ist integral mit der Abdeckung 3 ausgebildet. Eine Rändelschraube 13 greift in ein Außengewinde des Stempels 11 ein, so dass durch Verstellung der Rändelschraube 13 der Stempel auf der Unterseite der Abdeckung 3 in seiner Länge oder Erstreckung gegenüber der Abdeckung 3 verstellbar ist. Die Rändelschraube 13 ist durch ein Lagermittel 14 gehalten. Das Lagermittel 14 weist außerdem zu einer Außenkontur der Rändelschraube 13 passende Innenkontur auf, so dass zur Verstellung der Rändelschraube 13 gegenüber dem Lagermittel 14 eine Stellkraft aufzuwenden ist, welche die Rastkräfte zwischen diesen Komponenten überwindet.

Die gezeigte Montagestellung zeigt außerdem den am Fahrzeugblech festgelegten Trägerrahmen 8. In dem Trägerrahmen 8 ist eine - nicht zu der erfindungsgemäßen Baugruppe gehörende - Ladestecker-Kupplung 15 ausgebildet. Ein Tastschalter, hier in Gestalt eines Mikroschalters 16 ist Bestandteil der Ladestecker-Kupplung. Wie die gebrochene Linie 20 zeigt, befindet sich in den Figuren 2a, 2b und 2c die montierte Ladestecker-Kupplung zu dem Trägerrahmen 8 in ihrer Solllage, also in einer Lage, in welcher die Gehäusekomponenten der Ladestecker-Kupplung 15 auf der Linie 20 liegen.

Figur 2a zeigt den Zustand der fertigmontierten, jedoch noch nicht justierten Ladeschnittstelle. Zur Justage wird bei der erfindungsgemäßen Baugruppe in Figur 2b die Abdeckung 3 in Richtung der Ladestecker-Kupplung 15 eingedrückt, bis die Abdeckung 3 zur Anlage an einem Anschlag des Trägerrahmens 8 gelangt. Anschließend wird die Rändelschraube 13 verdreht, um den Stempel 11 zu verstellen, bis der Mikroschalter 16 auslöst. Dies ist durch den Pfeil 25 visualisiert. Löst der Schalter 16 aus, wird die Abdeckung wieder freigegeben. Da die Abdeckung 3 durch eine elastische Dichtung (hier nicht dargestellt) wieder in ihre Ruhelage gebracht wird, stellt sich wieder ein Abstand zwischen dem Anschlag des Trägerrahmens 8 und der Abdeckung 3 ein, wie in Figur 2c dargestellt. Der nun vorjustierte Stempel 11 kann, wie durch den gebrochenen Pfeil 26 visualisiert, noch nachgestellt werden, so dass die Auslösung des Schalters 16 bereits erfolgt, bevor die Abdeckung 3 an dem Anschlag des Trägerrahmens 8 erfolgt. Dazu kann die Rändelschraube 13 beispielsweise eine vorgegebene Anzahl von Rasten weitergedreht werden. Diese vorgegebene Anzahl von Rasten kann so abgestimmt sein, dass der erlaubte Schalterhub des Mikroschalters 16 auch dann nicht in belastender oder gar zerstörender Weise überschritten wird, wenn die Abdeckung 3 bis zur Anlage 8 durchgedrückt wird.

Die in Figur 2c finalisiert justierte Einrichtung stellt sicher, dass die Auslösung des Schalters 16 bei einer Betätigung der Abdeckung 3 in sicherer Weise erfolgt.

Die Figuren 3a, 3b und 3c zeigen ein Montagebeispiel mit derselben Einrichtung, wobei hier jedoch die Ladestecker-Kupplung aufgrund von Toleranzen oder Montagebesonderheiten gegenüber der Linie 20 in Richtung Fahrzeuginneres zurückliegt. Wiederum wird in Figur 3b eine Einstellung vorgenommen, bis der Schalter 16 auslöst, diesmal ist jedoch eine grössere Verstellung des Stempels erforderlich, wie sichtbar. Das Betätigungselement 10 erhält dadurch eine größere Längenerstreckung in Richtung des Fahrzeuges. Wiederum kann in Figur 3c die Nachjustage erfolgen, um jederzeit eine sichere Auslösung zu gewährleisten. In der final justierten Gestaltung der Figur 3c ist auch bei einer solchen Toleranzabweichung jederzeit eine ordnungsgemäße Auslösung durch Druckausübung auf die Abdeckung 3 gewährleistet.

In den Figuren 4a, 4b und 4c ist eine Abweichung der Montageposition der Ladestecker-Kupplung 15 in Richtung der Abdeckung 3 gezeigt. In diesem Fall ist die in Figur 4b gezeigte Verstellung geringer als die Verstellung, wie sie in den vorherigen Beispielen erforderlich war. Doch auch diese Gestaltung erlaubt eine ordnungsgemäße Justage und nach finaler Einstellung in Figur 4c eine sichere und komfortable Betätigung des Tastschalters 16.

## Patentansprüche

1. Baugruppe für eine Ladestecker-Kopplungseinrichtung an einem Kraftfahrzeug, aufweisend:
einen Trägerrahmen (8) zur Befestigung an der Innenseite eines Karosseriebauteils (1), wobei in dem Trägerrahmen (8) eine Öffnung zur Aufnahme einer Ladestecker-Kupplung (5) gebildet ist,
einen Aktuator (4), welcher mit dem Trägerrahmen (8) gekoppelt ist,
eine gegen den Trägerrahmen (8) schwenkbare Abdeckung (3),
einen mit der Abdeckung (3) verbundenen Schwenkarm (4a), welcher mit dem Aktuator (4) gekoppelt ist und die Abdeckung (3) unter Antrieb des Aktuators gegenüber dem Trägerrahmen (8) zwischen einer
- Schließstellung, in welcher die Abdeckung (3) am Trägerrahmen (8) anliegt und einer
- Freigabestellung, in welcher die Abdeckung (3) gegenüber dem Trägerrahmen (8) ausgeschwenkt ist, schwenkt,
wobei an dem Trägerrahmen (8) eine Dichtung (9) aus einem elastischen Material angeordnet ist, wobei die Dichtung (9) dichtend an dem Trägerrahmen (8) und der Abdeckung (3) anliegt, wenn sich die Abdeckung (3) in der Schließstellung befindet,
**dadurch gekennzeichnet,**
**dass** an der Abdeckung (3) ein Betätigungselement (3b; 10) angeordnet ist, wobei das Betätigungselement (3b; 10) an der dem Trägerrahmen (8) zugewandten Innenseite der Abdeckung (3) hervorsteht,
wobei das Betätigungselement (3b; 10) in seiner Erstreckung von der Abdeckung (3) in Richtung des Trägerrahmens (8) längenverstellbar ausgebildet ist und
in seiner Lage derart an der Abdeckung (3) platziert ist, dass es in der Schließstellung in die vom Trägerrahmen (8) umfasste Öffnung eintaucht.

2. Baugruppe nach Anspruch 1, wobei das Betätigungselement (3b; 10) zur Längenverstellung eine Schraube mit zugeordnetem Gewinde aufweist.

3. Baugruppe nach Anspruch 1, wobei das Betätigungselement (10) eine Gewindehülse (12) und einen auf oder in der Gewindehülse schraubbaren Stelleinsatz (11) aufweist, so dass durch Schrauben des Stelleinsatzes (11) gegenüber der Gewindehülse (12) eine Längenverstellung des Betätigungselements (10) erfolgt.

4. Baugruppe nach Anspruch 3, wobei der Stelleinsatz (11) radiale Rastmittel aufweist, welche in korrespondierende Haltemittel (14) an der Abdeckung (3) eingreifen, um den Stelleinsatz (11) nach erfolgter Längeneinstellung in seiner Stellage gegen Drehung zu verrasten.

5. Baugruppe nach Anspruch 1, wobei das Betätigungselement eine Schubhülse und einen in die Schubhülse eingesteckten Schubeinsatz aufweist, so dass durch Verschieben des Schubeinsatz in der Schubhülse eine Längenverstellung erfolgt.

6. Baugruppe nach Anspruch 5, wobei die Schubhülse und/oder der Schubeinsatz Sicherungsmittel aufweisen, um die Schubhülse und den Schubeinsatz zueinander gegen Längenverstellung zu arretieren.

7. Baugruppe nach Anspruch 6, wobei die Sicherungsmittel einen Stift oder Dorn aufweisen, welcher durch die Schubhülse und den Schubeinsatz gesteckt oder getrieben wird.

8. Verfahren zum Einbau einer Baugruppe nach einem der vorangehenden Ansprüche, mit den Schritten:
- Festlegen des Trägerrahmens (8) an der Innenseite eines Karosserieteils (1) an einem Kraftfahrzeug, wobei der Trägerrahmen (8) eine Öffnung in dem Karosserieteil umgreift;
- Festlegen einer Ladestecker-Kupplung (5) an dem Trägerrahmen (8) und/oder an dem Karosserieteil, wobei die Ladestecker-Kupplung mit ihrem Kupplungsabschnitt im freien Bereich der Öffnung (1a) in dem Karosserieteil angeordnet wird, so dass ein in der Ladestecker-Kupplung ausgebildeter Tastschalter in der Öffnung liegt;
- Schwenken der Abdeckung (3) in die Schließstellung;
- Eindrücken der Abdeckung (3) in Richtung der abgedeckten Ladestecker-Kupplung (5) unter Kompression einer zwischenliegenden Dichtung, bis zur Anlage der Abdeckung (3) an einem Anschlag des Trägerrahmens;
- Längenverstellen des Betätigungselements (3; 10), bis der Tastschalter (16) betätigt wird.

9. Verfahren nach Anspruch 8, mit den weiteren Schritten:
- Freigeben der Abdeckung, so dass diese durch die Dichtung zwischen Abdeckung (3) und Trägerrahmen (8) in die Schließstellung zurückgestellt wird;
- Längenverstellen des Betätigungselements zur LängenVergrößerung um einen vorgegebenen Wert.

10. Verfahren nach Anspruch 8 oder 9, wobei abschließend ein Fixieren des Betätigungselements gegenüber Längenverstellung erfolgt.
